# EUROPÄISCHE PATENTSCHRIFT

(11) **EP 0 647 666 B1**
(45) Veröffentlichungstag und Bekanntmachung des Hinweises auf die Patenterteilung: **16.07.1997**
(21) Anmeldenummer: 94115255.5
(22) Anmeldetag: 28.09.1994
(51) Int. Cl.: C08G 18/10, C08G 18/64

(54) **Polyisocyanat-Zubereitungen**
Polyisocyanate preparations
Préparation de polyisocyanate

(30) Priorität: 11.10.1993 DE 4334549
(43) Veröffentlichungstag der Anmeldung: 12.04.1995
(73) Patentinhaber: BAYER AG, 51368 Leverkusen (DE)
(72) Erfinder: Mayer, Eduard, Dr., D-41539 Dormagen (DE); Münzmay, Thomas, Dr., D-41539 Dormagen (DE); Nefzger, Hartmut, Dr., D-50259 Pulheim (DE); Rasshofer, Werner, Dr., D-51061 Köln (DE)

(56) Entgegenhaltungen:
- EP-A- 0 442 435
- EP-A- 0 550 901

## Beschreibung

Die Erfindung betrifft ein neues Verfahren zur Herstellung von bei Raumtemperatur flüssigen Polyisocyanat-Zubereitungen durch Erhitzen von aromatischen Polyisocyanaten in Abmischung mit ausgewählten, Harnstoffgruppen aufweisenden Polyurethanen in zerkleinerter Form, Polyisocyanat-Zubereitungen, die durch einen bestimmten Gehalt an Isocyanat-, Harnstoff- und Urethangruppen gekennzeichnet sind. Die erfindungsgemäßen Verfahrensprodukte können als Isocyanat-Komponente bei der Herstellung von Polyurethan-Elastomeren nach dem Reaktionsspritzgießverfahren verwendet werden.

Die Herstellung von Polyurethan-Elastomeren einer über 0,9 g/cm³ liegenden Dichte nach dem Reaktionsspritzgießverfahren gehört zum bekannten Stand der Technik (vgl. z.B. DE-AS 2 622 951, EP-A 0 355 000, DE-OS 3 914 718, DE-OS 4 115 037 oder US-PS 4 374 210). Die nach diesem Verfahren erhältlichen Formkörper werden insbesondere zur Herstellung von flexiblen Automobil-Stoßstangen oder -Karosserieelementen verwendet.

Die mechanischen und thermomechanischen Eigenschaften dieser Formkörper, beispielsweise ihre Härte, Steifigkeit und Wärmeformbeständigkeit hängen ganz wesentlich von ihrem Gehalt an Harnstoffsegmenten ab. In der Praxis erfolgt der Einbau derartiger Harnstoffsegmente in der Regel durch Mitverwendung von niedermolekularen, sterisch gehinderten aromatischen Diaminen wie insbesondere DETDA (= 1-Methyl-3,5-diethyl-2,4-diaminobenzol oder dessen technische Gemische mit 1-Methyl-3,5-diethyl-2,6-diaminobenzol) als niedermolekulare Kettenverlängerungsmittel oder von Aminogruppen aufweisenden Polyethern als höhermolekulare Aufbaukomponente bzw. als Kettenverlängerungsmittel bei der Isocyanat-Polyadditionsreaktion.

Beim altbekannten Verfahren gemäß DE-AS 2 622 951 wird der Gehalt an DETDA in der mit der Polyisocyanat-Komponente umzusetzenden "Polyolkomponente" durch die hohe Reaktivität des Diamins limitiert, da bei zu hoher Konzentration an DETDA Vermischungsstörungen und im Extremfall vorzeitige Verfestigung des Reaktionsgemischs beobachtet werden müssen. Einen wesentlichen Vorteil stellt demgegenüber das Verfahren der EP-A 0 355 000 dar, bei welchem die als Ausgangsmaterial eingesetzten Polyisocyanate zunächst mit den üblicherweise verwendeten Polyetherpolyolen zu NCO-Prepolymeren umgesetzt werden, die dann nach dem Prinzip der tionsspritzgußtechnik mit DETDA kettenverlängert werden. Auf diese Weise ist eine beträchtliche Erhöhung der Harnstoffkonzentration im letztendlich erhaltenen Formteil und damit eine Verbesserung der mechanischen und thermomechanischen Eigenschaften möglich.

Der naheliegende Gedanke, die Diamin-Konzentration im Reaktionsgemisch durch Vorreaktion der Polyisocyanat-Komponente mit Diaminen, insbesondere DETDA, zu erhöhen, ist allerdings nicht gangbar, da die Umsetzung von organischen Polyisocyanaten selbst mit geringen Mengen an Diaminen zu einem dramatischen Viskositätsanstieg führt - im ungünstigsten Fall können sogar Feststoffe ausfallen - so daß eine Verwendung der Umsetzungsprodukte als Polyisocyanat-Komponente beim spritzgußverfahren ("RIM-Verfahren") nicht möglich ist.

Überraschenderweise wurde jetzt jedoch gefunden, daß Harnstoffgruppen aufweisende, als Polyisocyanat-Komponente für das RIM-Verfahren geeignete Polyisocyanat-Zubereitungen erhalten werden können, indem man die überlicherweise beim RIM-Verfahren eingesetzten aromatischen Polyisocyanate mit zerkleinerten Polyurethan-Polyharnstoffen der nachstehend näher beschriebenen Art vermischt und die Mischung bei erhöhten Temperaturen homogenisiert.

Die Verwendung von derartigen, nachstehend näher beschriebenen Polyisocyanat-Zubereitungen als Polyisocyanate-Komponente beim RIM-Verfahren führt zu einer Reihe bemerkenswerter Vorteile:
1. Es können höhere Gehalte an Harnstoffsegmenten im Elastomer realisiert werden, ohne Reaktivitätserhöhung der Komponenten.
2. Bei vergleichbarer Härte können Elastomere mit besserer Wärmeformbeständigkeit erhalten werden.
3. Bei ähnlichem Harnstoff- und Urethansegmentgehalt können längere Fließwege realisiert werden, d.h., es können größere Formteile hergestellt werden.
4. Das Verfahren beinhaltet die Möglichkeit, den unvermeidbaren Produktionsabfall (Anguß, Austrieb etc.) wiederzuverwenden und damit kostengünstiger zu produzieren.
5. Das Verfahren eröffnet außerdem die Möglichkeit, nach dem RIM-Verfahren erhaltene, Harnstoffgruppen aufweisende Polyurethane zu recyclisieren.

Gegenstand der Erfindung ist ein Verfahren zur Herstellung von bei Raumtemperatur flüssigen Polyisocyanat-Zubereitungen mit einem Gehalt an aromatisch gebundenen Isocyanatgruppen von bis zu 43,5 Gew.-% durch Erhitzen von
a) bei Raumtemperatur flüssige, gegebenenfalls chemisch modifizierte Polyisocyanatgemische der Diphenylmethanreihe mit einem NCO-gehalt von 25 bis 33,6 Gew.-%, mit
b) bis zu 35 Gew.-%, bezogen auf das Gesamtgewicht der Komponenten a) und b), an in zerkleinerter Form vorliegenden Polyurethankunststoffen,
dadurch gekennzeichnet, daß man als Polyurethankunststoffe Harnstoffgruppen aufweisende Polyurethane mit einer über 0,9 g/cm³ liegenden Dichte, einem Harnstoffgruppengehalt von 1,5 bis zu 2,5 mol/kg und einem Urethangruppengehalt von 1,5 bis zu 3,8 mol/kg, vorzugsweise in auf einen mittleren Teilchendurchmesser von maximal 10 mm zerkleinerter Form, verwendet und das Gemisch bis zu seiner völligen Homogenisierung auf Temperaturen von oberhalb 160°C erhitzt.

Der Gehalt der nach dem erfindungsgemäßen Verfahren erhaltenen Polyisocyanat-Zubereitungen an Harnstoff- und Urethangruppen entspricht der Menge der beim erfindungsgemäßen Verfahren eingesetzten Komponente b) und der Konzentration dieser Komponente b) an den genannten Gruppierungen.

Die nach dem erfindungsgemäßen Verfahren erhaltenen Polyisocyanat-Zubereitungen können als Polyisocyanat-Komponente bei der Herstellung von Harnstoffgruppen aufweisenden Polyurethanelastomeren nach dem Reaktionsspritzgießverfahren verwendet werden.

Die Herstellung von modifzierten Polyisocyanaten durch Erhitzen von einfachen Polyisocyanaten mit Polyurethankunststoffen gehört zwar bereits zum vorbekannten Stand der Technik (DE-OS 2035 175 bzw. EP-A-0 047 419), jedoch betreffen diese Vorveröffentlichungen keine Polyisocyanat-Zubereitungen mit einem erhöhten Gehalt an Harnstoffgruppen, ganz zu schweigen von deren Verwendung als Isocyanat-Komponente bei der Herstellung von hochwertigen Polyurethan-Elastomeren nach dem RIM-Verfahren.

Als beim erfindungsgemäßen Verfahren als Ausgangsmaterial einzusetzende Polyisocyanate a) werden die bekannten, gegebenenfalls chemisch modifizierten, bei Raumtemperatur flüssigen Polyisocyanatgemische der Diphenylmethanreihe mit einem NCO-Gehalt von 25 bis 23,6 Gew.-% eingesetzt. Hierzu gehören sowohl bei Raumtemperatur flüssigen Gemische von 4,4'-Diisocyanatodiphenylmethan mit 2,4'- und gegebenenfalls 2,2'-Diisocyanatodiphenylmethan, als auch durch teilweise Carbodimidisierung und/oder Urethanisierung der Isocyanatgruppen von 4,4'-Diisocyanatodiphenylmethan verflüssigtes Polyisocyanat als auch bei Raumtemperatur flüssigen Polyisocyanatgemische, die neben den genannten Diisocyanaten bis zu 20 Gew.-%, bezogen auf Gesamtgewicht, an höherfunktionellen Homologen der genannten Diisocyanate enthalten.

Bei der beim erfindungsgemäßen Verfahren einzusetzenden Komponente b) handelt es sich um Polyurethan-Polyharnstoffe in mechanisch zerkleinerter Form, vorzugsweise mit einem maximalen mittleren Teilchendurchmesser von 10 mm. Die Zerkleinerung kann beispielsweise mittels üblicher Schneidemühlen erfolgen.

Bei den Polyurethan-Polyharnstoffen handelt es sich um gegebenenfalls Füll-oder Verstärkungsstoffe in einer Menge von bis zu 30 Gew.-%, bezogen auf das Gesamtgewicht der Komponente b) enthaltende massive oder mikrozellulare Materialen einer über 0,9 g/cm³, vorzugsweise bei 0,95 bis 1,3 g/cm³, liegenden Dichte. Die Polyurethan-Polyharnstoffe sind insbesondere durch einen Harnstoffgruppengehalt von 0,15 bis zu 2,5, vorzugsweise 0,15 bis 2,2 mol/kg, und einen Urethangruppengehalt von 0,15 bis zu 3,8, vorzugsweise 0,15 bis 3,5 mol/kg, jeweils bezogen auf Verstärkungsstoff-freie Polymermatrix gekennzeichnet. Besonders gut als Komponente b) geeignet sind die nach den oben erwähnten RIM-Verfahren des Standes der Technik erhaltenen, den hier gemachten Ausführungen entsprechenden Polyurethan-Polyharnstoffe.

Zur Durchführung des erfindungsgemäßen Verfahrens werden Gemische aus den Polyisocyanaten a) und den zerkleinerten Polyurethan-Polyharnstoffen b) bis zu ihrer Homogenisierung auf mindestens 160°C, vorzugsweise 180 bis 250°C und besonders bevorzugt 180 bis 220°C, erhitzt, wobei in diesen Gemischen pro 100 Gew.-Teilen der Gemische, bis zu 35 Gew.-Teile, vorzugsweise 10 bis 30 Gew.-Teile der Komponente b) zum Einsatz gelangen. Die Erhitzungsdauer hängt selbstverständlich in starkem Maße von verschiedenen Variablen wie beispielsweise Erhitzungstemperatur. Art und Menge der eingesetzten Komponenten a) und b) oder Zerkleinerungsgrad der Komponente b) ab und kann daher innerhalb breiter Bereiche von 1 bis 360, vorzugsweise 5 bis 60 min schwanken.

Die erfindungsgemäßen Verfahrensprodukte mit den bereits genannten Kenndaten stellen wertvolle Ausgangsmaterialien für das RIM-Verfahren dar.

Reaktionspartner für die erfindungsgemäßen Polyisocyanat-Zubereitungen bei dieser erfindungsgemäßen Verwendung sind beispielsweise
(i) Polyetherpolyole des aus Hydroxylgruppengehalt und Hydroxylfunktionalität berechenbaren Molekulargewichts 1 800 bis 12 000, vorzugsweise 3 000 bis 7 000, der in DE-AS 2 622 951 beispielhaft genannten Art,
(ii) endständige Aminogruppen aufweisende Polyether des genannten Molekulargewichtsbereichs der in EP-B-0 081 701 beispielhaft genannten Art,
(iii) mehrwertige Alkohole des Molekulargewichtsbereichs 62 bis 1799, vorzugsweise 62 bis 300, wie beispielsweise Ethylenglykol, Proyplenglykol, Trimethylolpropan, Glycerin, Di-Alkoxylierungsprodukte derartiger Alkohole des genannten Molekulargewichts oder beliebige Gemische derartiger mehrwertiger Alkohole,
(iv) niedermolekulare, endständige Aminogruppen aufweisende Polyether des Molekulargewichtsbereichs 230 bis 1 799, vorzugsweise 350 bis 450,
und/oder
v) aromatische Diamine der bereits oben genannten Art, insbesondere sterisch gehinderte aromatische Diamine wie DETDA.

Vorzugsweise werden bei der Verwendung der erfindungsgemäßen Polyisocyanat-Zubereitungen als Reaktionspartner Gemische der unter (i) genannten Polyether-Polyole mit DETDA verwendet, wobei diese Gemische vorzugsweise zu 10 bis 95 Gew.-% aus DETDA bestehen. Besonders bevorzugt werden bei der Verwendung solche Kombinationen aus erfindungsgemäßen Polyisocyanat-Zubereitungen und Reaktionspartnern der genannten Art verwendet, daß die resultierenden Formkörper ihrerseits einen Harnstoffgruppengehalt von mindestens 1,0, vorzugsweise von 1,2 bis 2,5 und besonders bevorzugt von 1,4 bis 2,35 mol/kg und einen Urethangruppengehalt von mindestens 0,05, vorzugsweise von 0,1 bis 1,8 und besonders bevorzugt von 0,3 bis 1,0 mol/kg, jeweils bezogen auf Verstärkungsstoff-freie Polyurethanmatrix, aufweisen.

Im übrigen können bei der Verwendung selbstverständlich die beim RIM-Verfahren üblicherweise eingesetzten, in den zitierten Vorveröffentlichungen beispielhaft genannten Hilfs- und Zusatzstoffe mitverwendet werden. Auch bei der Verwendung werden im übrigen Art und Mengenverhältnisse der eingesetzten Ausgangsmaterialien und der Befüllungsgrad der zur Anwendung gelangenden Formwerkzeuge so gewählt, daß die resultierenden Formkörper eine Dichte von mindestens 0,9, vorzugsweise von 0,95 bis 1,3 g/cm³ aufweisen.

Die bei der Verwendung resultierenden Formkörper zeichnen sich wegen ihres hohen Gehalts an Harnstoffgruppen insbesondere durch eine ausgezeichnete Wärmeformbeständigkeit (SAG-Werte) aus. Sie eignen sich ebenso wie die bekannten RIM-Formkörper insbesondere zur Herstellung von Automobil-Stoßstangen bzw. -Karosserieteile.

In den nachfolgenden Beispielen beziehen sich alle Prozentangaben auf das Gewicht.

### Beispiele

Die Verarbeitung der in den folgenden Beispielen beschriebenen Rezepturen erfolgte mit Hilfe der Reaktionsspritzgußtechnik (RIM-Verfahren).

Die erfindungsgemäßen Polyisocyanat-Zubereitungen (= Komponente A) und das Vernetzergemisch (= Komponente B) wurden einem Hochdruckdosieraggregat zugeführt und nach intensiver Vermischung in einem zwangsgesteuerten Mischkopf in kürzester Zeit in ein temperierbares heißes Metallwerkzeug gedrückt, wobei die Forminnenwand mit einem gebrauchsfertigen, handelsüblichen, äußeren Formtrennmittel auf Seifenbasis RCTW 2006 der Fa. Chem Trend beschichtet war. Das Plattenwerkzeug aus Aluminium erlaubt die Herstellung von Prüfplatten der Abmessungen 300 x 200 x 3 mm.

Charakterisiert wurden die Elastomere durch Shore D (DIN 53 505) und SAG-Test (Prüfkörperlänge 100 bzw. 150 mm, Prüfkörperdicke 3 mm, 1 h bei 160°C).

### Ausgangsprodukt b1):

Ein nach der Reaktionsspritzgußtechnik hergestelltes, mit ca. 22 Gew.-% Glasfaser gefülltes Polyurethan-Polyharnstoff-Elastomer mit einem Gehalt von 1,9 mol Harnstoff- und 0,7 mol Urethangruppen pro kg Polymermatrix.

### Ausgangsprodukt b2):

Ein nach der Reaktionsspritzgußtechnik hergestelltes, mit ca. 22 Gew.-% Glasfaser gefülltes Polyurethan-Polyharnstoff-Elastomer mit einem Gehalt von 2,0 mol Harnstoff- und 0,5 mol Urethangruppen pro kg Polymermatrix.

### Beispiel 1

In einem 100 l-Kessel mit Mantelheizung und Wendelrührer werden 40 kg eines Polyisocyanatgemisches der Diphenylmethanreihe mit einem NCO-Gehalt von 32,5 %, einem Anteil an Diisocyanatodiphenylmethan-Isomeren von 90 % (zum Rest höherfunktionelle Polyisocyanate), die ihrerseits zu ca. 90 % aus 4,4'-Diisocyanatodiphenylmethan bestehen und 10 kg getrocknetes Ausgangsprodukt b1) Granulat (Korngröße < 10 mm Durchmesser) innerhalb von 30 Minuten auf 200°C erhitzt und weitere 30 Minuten bei dieser Temperatur gerührt. Nachdem die Mischung auf 50°C abgekühlt wurde, werden 0,12 kg trockene p-Toluolsulfonsäure zugegeben und gelöst. Man erhält eine erfindungsgemäße Polyisocyanat-Zubereitung mit einem NCO-Gehalt von 23,4 % und einer Viskosität von 2 000 mPa.s bei 25°C bzw. 300 mPa.s bei 50°C. Für die Polyisocyanat-Zubereitung ergibt sich ein theoretischer Gehalt von 0,31 mol Harnstoffgruppen und 0,1 mol Urethangruppen pro kg Polyisocyanat-Zubereitung, exklusive Füllstoff.

### Beispiel 2

In einem 100 l-Kessel mit Mantelheizung und Wendelrührer werden 30 kg eines Polyisocyanatgemisches der Diphenylmethanreihe mit einem NCO-Gehalt von 32,5 %, einem Anteil an Diisocyanatodiphenylmethan-Isomeren von 90 % (zum Rest höherfunktionelle Polyisocyanate), die ihrerseits zu ca. 90 % aus 4,4'-Diisocyanatodiphenylmethan bestehen und 10 kg b1-Granulat (Korngröße < 10 mm Durchmesser) innerhalb von 30 Minuten auf 200°C erhitzt und weitere 30 Minuten bei dieser Temperatur gerührt. Nachdem die Mischung auf 50°C abgekühlt wurde, werden 0,05 kg Propionylchlorid zugegeben. Man erhält eine erfindungsgemäße Polyisocyanat-Zubereitung mit einem NCO-Gehalt von 20,2 % und einer Viskosität (50°C) von 1 900 mPa.s. Für die Polyisocyanat-Zubereitung ergibt sich ein theoretischer Gehalt von 0,41 mol Harnstoffgruppen und 0,10 mol Urethangruppen pro kg Polyisocyanat-Zubereitung, exklusive Füllstoff.

### Beispiel 3

In einem 100 l-Kessel mit Mantelheizung und Wendelrührer werden 40 kg eines Polyisocyanatgemisches der Diphenylmethanreihe mit einem NCO-Gehalt von 32,5 %, einem Anteil an Diisocyanatodiphenylmethan-Isomeren von 90 % (zum Rest höherfunktionelle Polyisocyanate), die ihrerseits zu ca. 90 % aus 4,4'-Diisocyanatodiphenylmethan bestehen und 10 kg getrocknetes Ausgangsprodukt b2)-Granulat (Korngröße < 10 mm Durchmesser) innerhalb von 30 Minuten auf 200°C erhitzt und weitere 30 Minuten bei dieser Temperatur gerührt. Nachdem die Mischung auf 50°C abgekühlt wurde, werden 0,12 kg trockene p-Toluolsulfonsäure zugegeben und gelöst. Man erhält eine erfindungsgemäße Polyisocyanat-Zubereitung mit einem NCO-Gehalt von 23,3 % und einer Viskosität (50°C) von 200 mPa.s. Für die Polyisocyanat-Zubereitung ergibt sich ein theoretischer Gehalt von 0,33 mol Harnstoffgruppen und 0,08 mol Urethangruppen pro kg Polyisocyanat-Zubereitung, exklusive Füllstoff.

### Beispiel 4 (Vergleichsbeispiel)

In einem 100 l-Kessel mit Mantelheizung und Wendelrührer werden 40 kg eines Polyisocyanatgemisches der Diphenylmethanreihe mit einem NCO-Gehalt von 32,5 %, einem Anteil an Diisocyanatodiphenylmethan-Isomeren von 90 % aus 4,4'-Diisocyanatodiphenylmethan bestehen und 5,5 kg eines Polypropylenglykolgemisches (OH-Zahl 515) 3 Stunden bei 80°C gerührt. Man erhält eine Polyisocyanat-Zubereitung mit einem NCO-Gehalt von 23,8 % und einem Urethangruppengehalt von 1,1 mol/kg.

### Beispiele 5 - 8

100 Gew.-Teile der Hilfs- und Zusatzmittel enthaltenden Polyolgemische gemäß Tabelle 1 werden in 4 Parallelversuchen mit den in Tabelle 2 genannten Polyisocyanat-Zubereitungen nach dem Reaktionsspritzgußverfahren verarbeitet. Als Formwerkzeug wurde eine Stahlform der Abmessung 300 x 200 x 3 mm verwendet; die Werkzeugtemperatur betrug 70°C, die Formstandzeit 30 s. Unter diesen Bedingungen resultierten Formteile mit einwandfreiem Entformungsverhalten und Aussehen.

**Tabelle 1:**

| **Polyolgemische** | | | |
|---|---|---|---|
| Komponenten | Polyolgemisch 1 Teile | Polyolgemisch 2 Teile | Polyolgemisch 3 Teile |
| DETDA¹⁾ | 26,00 | 29,14 | 32,01 |
| DE 3900²⁾ | 37,40 | 34,40 | 31,64 |
| DE 3969³⁾ | 30,00 | 30,00 | 30,00 |
| PRSH⁴⁾ | 2,00 | 1,91 | 1,83 |
| ®Jeffamin D 400⁵⁾ | 1,80 | 1,80 | 1,80 |
| ZN-STEARAT | 1,80 | 1,80 | 1,80 |
| ®DABCO 33 LV⁶⁾ | 0,70 | 0,70 | 0,70 |
| ®FOMREZ UL 28⁷⁾ | 0,20 | 0,20 | 0,20 |
| ®TEGOSTAB B 8404⁸⁾ | 0,10 | 0,10 | 0,10 |
| SUMME Teile | 100,00 | 100,00 | 100,00 |

| | | | |
|---|---|---|---|
| ¹⁾ 65 % 1-Methyl-3,5-diethyl-2,4-diaminobenzol und 35 % 1-Methyl-3,5-diethyl-2,6-diaminobenzol | | | |
| ²⁾ Polyetherpolyol der OH-Zahl 35, hergestellt durch Propoxylierung von Trimethylolpropan und anschließender Ethoxylierung des Propoxylierungsprodukts (PO:EO-Gewichtsverhältnis = 86,5:13,5) | | | |
| ³⁾ Polyetherpolyol der OH-Zahl 35, hergestellt durch Propoxylierung von Trimethylolpropan und anschließender Ethoxylierung des Propoxylierungsprodukts (PO:EO-Gewichtsverhältnis = 82,5:17,5) | | | |
| ⁴⁾ Rizinolsäure-Hexandiol-Polyester der OH-Zahl 35 | | | |
| ⁵⁾ Polyetherdiamin des Molekulargewichts 400, Lieferant: Texaco | | | |
| ⁶⁾ 33 %ige Lösung von Triethylendiamin in Dipropylenglykol | | | |
| ⁷⁾ Dimethyl-zinn-dilaurat | | | |
| ⁸⁾ handelsübliches Polyetherpolysiloxan der Firma Goldschmidt, Essen | | | |

**Tabelle 2:**

| **RIM-Rezepturen** | | | | |
|---|---|---|---|---|
| Beispiel | 5 (Vergleichsbeispiel) | 6 | 7 | 8 |
| Polyolgemisch | 1 | 1 | 2 | 3 |
| NCO-Zubereitung | Beispiel 4 | Beispiel 1 | Beispiel 1 | Beispiel 1 |
| (Gew.-Teile) | 71,3 | 72,5 | 79,3 | 85,5 |
| mol U/kg¹⁾ | 0,76 | 0,34 | 0,32 | 0,31 |
| mol H/kg²⁾ | 1,76 | 1,87 | 2,01 | 2,13 |

| | | | | |
|---|---|---|---|---|
| ¹⁾ mol Urethangruppen pro kg Polymermatrix | | | | |
| ²⁾ mol Harnstoffgruppen pro kg Polymermatrix | | | | |

### Beispiel 9 - 12

Die Beispiele 5 - 8 wurden durch polyolseitige Einarbeitung von 22 Gew.-% Glasfaser, bezogen auf Gesamtelastomer variiert.

**Tabelle 3:**

| **mechanische und thermomechanische Daten** | | | | | | | |
|---|---|---|---|---|---|---|---|
| | Beispiel 5 Vergleich | Beispiel 6 | Beispiel 7 | Beispiel 8 | Beispiel 9 Vergleich =Bsp.5 + 22% Glas | Beispiel 11 =Bsp.7 + 22 % Glas | Beispiel 12 =Bsp.8 + 22 % Glas |
| mol U/kg¹⁾ | 0,76 | 0,34 | 0,32 | 0,31 | 0,76 | 0,32 | 0,31 |
| mol H/kg²⁾ | 1,76 | 1,87 | 2,01 | 2,13 | 1,76 | 2,01 | 2,13 |
| Shore D | 66 | 59 | 64 | 68 | 67 | 67 | 68 |
| SAG [mm]⁴⁾ 100 mm | 21 | 22 | 14 | 8 | 12 | 6 | 2 |
| SAG [mm]⁵⁾ 150 mm | 84 | 87 | 60 | 40 | n.b.³⁾ | 31 | 16 |

| | | | | | | | |
|---|---|---|---|---|---|---|---|
| ¹⁾ mol Urethangruppen pro kg Polymermatrix | | | | | | | |
| ²⁾ mol Harnstoffgruppen pro kg Polymermatrix | | | | | | | |
| ³⁾ nicht bestimmt | | | | | | | |
| ⁴⁾ 1 h / 160°C, 100 mm Überstand | | | | | | | |
| ⁵⁾ 1 h / 160°C, 150 mm Überstand | | | | | | | |

Wie der Vergleich der Beispiele 5 und 6 zeigt, können mit der erfindungsgemäßen Harnstoff- und Urethangruppen-haltigen NCO-Zubereitung aus Beispiel 1 Elastomere erhalten werden, die trotz niedrigerer Härte eine vergleichbare Wärmeformbeständigkeit (SAG-Werte) aufweisen. Erhält man hingegen eine nach Beispiel 5 vergleichbare Härte wie in Beispiel 7 und 8, so werden mit der erfindungsgemäßen Harnstoff-und Urethangruppen-haltigen NCO-Zubereitung (Beispiel 1) Elastomere mit besserer Wärmeformbeständigkeit erhalten. Die gleichen Aussagen gelten für die glasfasergefüllten Elastomere aus den Beispielen 9 - 12.

## Patentansprüche

1. Verfahren zur Herstellung von bei Raumtemperatur flüssigen Polyisocyanat-Zubereitungen mit einem Gehalt an aromatisch gebundenen Isocyanatgruppen von bis zu 43,5 Gew.-% durch Erhitzen von
a) bei Raumtemperatur flüssige, gegebenenfalls chemisch modifizierte Polyisocyanatgemische der Diphenylmethanreihe mit einem NCO-Gehalt von 25 bis 33,6 Gew.-% mit
b) bis zu 35 Gew.-%, bezogen auf das Gesamtgewicht der Komponenten a) und b), an in zerkleinerter Form vorliegenden Polyurethankunststoffen,
dadurch gekennzeichnet, daß man als Polyurethankunststoffe Harnstoffgruppen aufweisende Polyurethane mit einer über 0,9 g/cm³ liegenden Dichte, einem Harnstoffgruppengehalt von 0,15 bis zu 2,5 mol/kg und einem Urethangruppengehalt von 0,15 bis zu 3,8 mol/kg in zerkleinerter Form verwendet und das Gemisch bis zu seiner völligen Homogenisierung auf Temperaturen von oberhalb 160°C erhitzt.

## Claims

1. A process for producing polyisocyanate preparations which are liquid at room temperature and which have a content of aromatically bonded isocyanate groups of up to 43.5 % by weight, by heating
a) polyisocyanate mixtures of the diphenylmethane series, which are liquid at room temperature, which have an NCO content of 25 to 33.6 % by weight and which are optionally chemically modified, with
b) up to 35 % by weight, with respect to the total weight of components a) and b), of polyurethane plastics which are present in comminuted form,
characterised in that polyurethanes which comprise urea groups, which have a density greater than 0.9 g/cm³, a content of urea groups of 0.15 to 2.5 mole/kg, and a content of urethane groups of 0.15 to 3.8 mole/kg, are used as the polyurethane plastics in comminuted form, and the mixture is heated to temperatures above 160°C until the complete homogenisation thereof.

## Revendications

1. Procédé de préparation de compositions de polyisocyanates liquides à température ambiante, contenant jusqu'à 43,5 % en poids de groupes isocyanates à liaisons aromatiques par chauffage de
a) des mélanges de polyisocyanates de la série du diphénylméthane, liquides à température ambiante, éventuellement soumis à modification chimique, à une teneur en NCO de 25 à 33,6 % en poids, avec
b) jusqu'à 35 % en poids, par rapport au poids total des composants a) et b), de résines synthétiques de polyuréthane sous forme fragmentée,
caractérisé en ce que l'on utilise en tant que résines synthétiques de polyuréthane des polyuréthanes à groupes urée ayant une densité supérieure à 0,9 g/cm³, une teneur en groupes urée de 0,15 à 2,5 mol/kg et une teneur en groupes uréthane de 0,15 à 3,8 mol/kg, à l'état fragmenté, et on chauffe le mélange à des températures supérieures à 160°C jusqu'à homogénéisation complète.
